# EUROPEAN PATENT SPECIFICATION

(11) **EP 3 227 066 B1**
(45) Date of publication and mention of the grant of the patent: **23.10.2019**
(21) Application number: 15865434.3
(22) Date of filing: 25.11.2015
(51) Int. Cl.: B26D 1/547, B23D 57/00, B26B 27/00, B60J 1/00, B60J 1/02, B25B 11/00

(54) **DEVICE FOR REMOVING VEHICLE WINDSHIELDS**
VORRICHTUNG ZUR ENTFERNUNG EINER FAHRZEUGWINDSCHUTZSCHEIBE
DISPOSITIF DE RETRAIT DE PARE-BRISE DE VÉHICULE

(30) Priority: 02.12.2014 SE 1451467
(43) Date of publication of application: 11.10.2017
(73) Proprietor: Ramhuset Patent AB, 791 77 Falun (SE)
(72) Inventor: ERICSON, Rolf, SE-791 52 Falun (SE)
(74) Representative: Aros Patent AB
(86) International application number: PCT/SE2015/051269
(87) International publication number: WO 2016/089286

(56) References cited:
- EP-A1- 3 145 684
- WO-A1-2004/103748
- WO-A1-2006/030212
- WO-A1-2012/121631
- WO-A1-2012/121631
- GB-A- 2 526 308
- JP-A- 2000 289 582
- US-A1- 2002 121 330

## Description

### TECHNICAL FIELD

This technology generally concerns a removal of vehicle window elements by cutting through adhesive bonding an edge area of a window element to a vehicle and specifically concerns a winder unit as well as a method for performing such window element removal.

### BACKGROUND

For several decades fixed vehicle window elements, in particular windshields, have been bonded by adhesive to the vehicle bodywork. Over the years the methods and devices have been constantly developed and refined from the early manually held and operated cutting tools of the knife or wire type and to present day winder units. An early type of winder unit assembly, such as disclosed in US Patent 6,616,800 B2, included two separate winder tools each employing one winch and spool mechanism. A further development that is frequently used today consists of a winder unit having two winch and spool mechanisms, such as shown in EP 1 628 846 B1, for tensioning a cutting wire so as to cut through the adhesive.

A majority of the early as well as presently used winder units are equipped with winder spools having a ratchet mechanism associated therewith in order to allow rotation of the spool in a tensioning direction and to block rotation of the spool in the opposite direction. In most cases the winder spool ratchet mechanisms are releasable to allow selective unwinding of wire from the respective spools, such as disclosed also in EP 2 186 664 B1.

Although functioning quite satisfactorily in most applications, this ratchet type winder unit does involve additional handling or manipulation of the unit in order to complete a windshield removal. For the releasable type ratchet mechanisms the additional measure of releasing and reapplying the ratchet function may, especially in situations where repositioning of the unit or units is required, cause inconvenience and handling problems. A varying resistance of the adhesive to the cutting action of the cutting wire may also cause inconvenience and concern when handling all such ratchet mechanisms.

In WO2012121631A1, upon which the preamble of claim 1 is based, has been disclosed a ratchet type winder unit having a separate, external friction brake mechanism. This friction brake mechanism performs the double function of first allowing selective release of the ratchet mechanism and then clamping of a winch operating means to resist unwinding rotation of the winch operating means and an associated cutting wire spool. This solution also involves additional winder unit manipulation.

### SUMMARY

It is a general object to provide a remedy to the discussed inconveniences and concerns within the above indicated field.

In particular it is an object to suggest an improved winder unit for cutting through adhesive bonding a vehicle window element to a vehicle.

In particular it is also an object to suggest an improved method of cutting through adhesive bonding a vehicle window element to a vehicle.

These and other objects are met by the technology as defined by the accompanying claims.

The invention relates generally to a winder unit of a kind used for tensioning a cutting wire to cut through adhesive bonding a window element to a vehicle. The unit is defined in claim 1.

Preferred further developments of the basic idea as well as embodiments thereof are specified in the dependent claims.

Advantages offered by the present technology, in addition to those described above, will be readily appreciated upon reading the detailed description of embodiments of the technology.

### BRIEF DESCRIPTION OF THE DRAWINGS

The technology and its further objects and advantages will be best understood by reference to the following description taken together with the accompanying drawings, in which:
- Fig. 1: is a schematical illustration of a prior art method and device for cutting through adhesive bonding a vehicle window element to a vehicle;
- Fig. 2: is a schematical illustration of a first embodiment of a winder unit of the presently suggested technology;
- Fig. 3: is a schematical section, along line A-A, through the winder unit of Fig. 2;
- Fig. 4: is a schematical illustration of practical steps of an exemplary method of removing a window element with the winder unit embodiment illustrated in Figs. 2-3;
- Fig. 5: is a schematical illustration of a second embodiment of a winder unit of the technology, having two separate winder spool assemblies;
- Fig. 6: is a schematical section, along line B-B, through the winder unit of Fig. 5;
- Fig. 7: is a schematical illustration of practical steps of an exemplary method of removing a window element with the second winder unit embodiment of Figs. 5 and 6;
- Fig. 8: is a partly schematical illustration of parts of a brake mechanism of the winder unit embodiments according to Fig. 2-3 and 5-6;
- Fig. 9: is a schematical illustration of a third modified embodiment being a variation of the winder unit that is illustrated in Figs. 2-3;
- Fig. 10: is an illustration of an alternative position of an anchor part of the third modified winder unit embodiment of Fig. 9;
- Fig. 11: is a schematical illustration of a fourth modified embodiment being a variation of the winder unit that is illustrated in Figs. 5 and 6; and
- Fig. 12: is an illustration of alternative positions of an anchor part of the fourth modified winder unit embodiment of Fig. 11.

### DETAILED DESCRIPTION

The technology will now be explained with reference to exemplifying embodiments thereof that are illustrated in the accompanying drawing figures. The embodiments serve to exemplify the use of the principles of the technology in different applications for removing fixed vehicle window elements that are bonded by adhesive to a vehicle, in particular to the bodywork of a vehicle. It shall be emphasized, though that the illustrations serve the purpose of describing preferred embodiments of the technology and are not intended to limit the technology to details or to any specific field of application thereof.

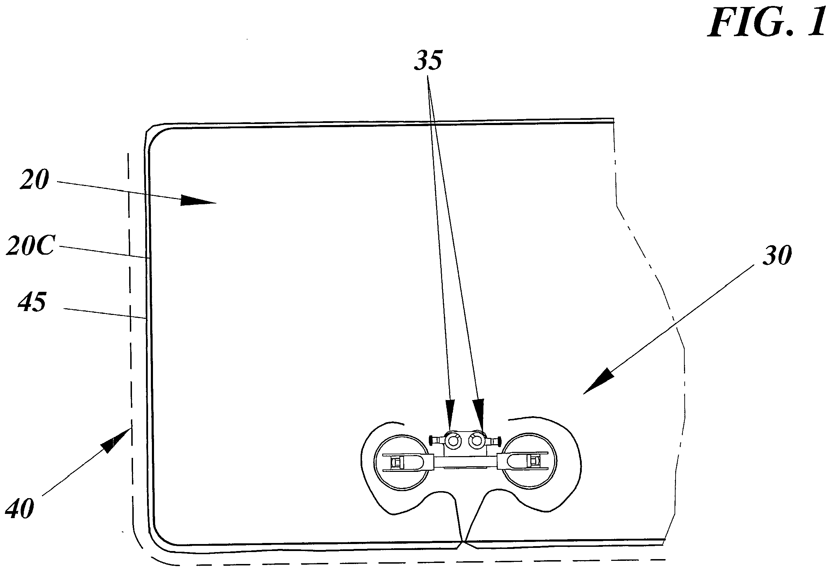

In Fig. 1 is illustrated an example of a prior art solution of the discussed kind, which was developed to facilitate a removal of vehicle window elements 20 being bonded by adhesive to a vehicle 40. This exemplifying prior art solution generally corresponds to that of the above mentioned EP 1 628 846 B1 and includes the use of ratchet mechanisms 35 to secure wire tensioning rotation of winder unit 30 spools and to block rotation in the opposite direction. Ratchet mechanisms 35 in winder units have in general secured a very useful function for the tensioning of a cutting wire 45 used to cut through an adhesive bead (not specifically shown). The use of ratchet mechanisms 35 requires an operator to perform a manipulation of a ratchet release actuator when winder units are to be re-positioned on the window element in order to complete the cutting out of said window element. With the use of ratchet mechanisms it may furthermore be difficult to moderate cutting wire tensioning in order to avoid unnecessarily time consuming and undesirable breaking of cutting wires as cutting resistance varies.

The proposed technology practically eliminates inconveniences and shortcomings of the prior art by suggesting solutions that allow for uncomplicated and comfortable handling of winder units even when used to remove window elements presenting special circumstances including significantly varying cutting resistance. The proposed technology allows for very accurate and practical adjustment of the cutting wire tensioning that in turn improves effective cutting through of the adhesive bead around window elements and minimizes the risk of wire breaks. An additional benefit is the elimination of the need for conventional ratchet mechanisms and not least the release manipulation thereof in connection with the re-positioning of winder units as well as in situations where wire tension increases dramatically.

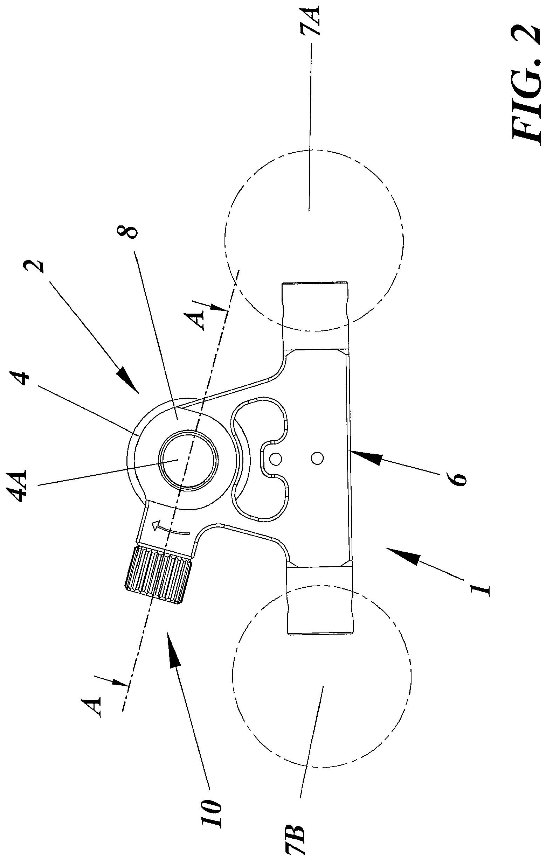

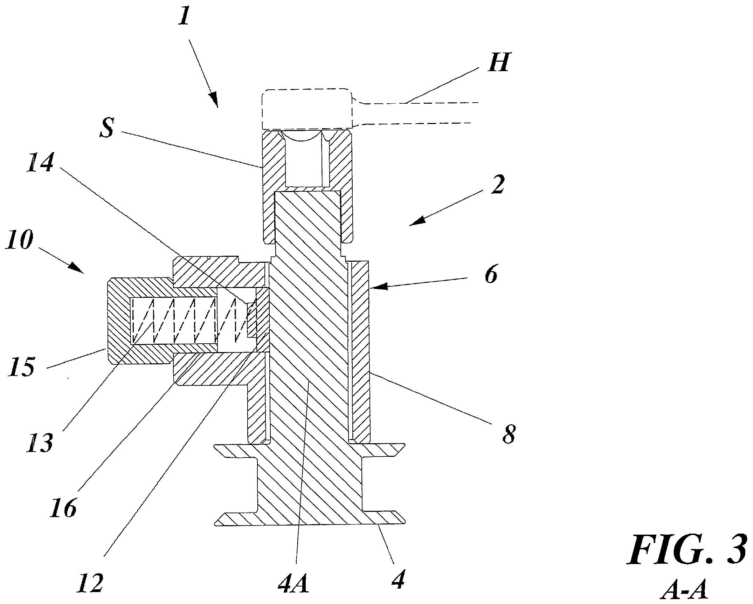

A first exemplifying embodiment of the present technology is shown in Figs. 2 and 3, wherein the technology is embodied in a winder unit 1 that is adapted for tensioning a cutting wire 45 when operated. As discussed above in connection with Fig. 1, the cutting wire 45 is tensioned to cut through adhesive (not specifically shown) bonding a vehicle window element 20 to a vehicle 40. The unit 1 has a winder spool assembly 2 with an associated winder spool 4 that is supported for rotation in a winder spool housing 8. The winder spool housing 8 is integrated in a winder unit body 6 and is rotated to wind up wire thereon or to unwind wire therefrom. As indicated very schematically in Fig. 3 the winder spool 4 may preferably be rotated in a conventional manner by means of e.g. a wrench-like handle H, such as a ratchet wrench or other similar means engaging a socket S provided at an upper end of the winder spool 4. For clarity it should be noted that in Fig. 2 the winder unit 1 is shown from above, that is from the side that during normal operation faces away from the window element 20.

The winder unit 1 also has two separate mounts 7A, 7B secured thereto for temporarily fixing the winder unit 1 on a surface of a window element 20. The mounts 7A, 7B are not shown in detail but are preferably of the commonly used suction cup type that is secured to the window element 20 by vacuum. In the below described method the wire 45 may preferably be guided in a guide groove (not shown) extending around an outer periphery of the mounts 7A, 7B. Although not illustrated here it may in some applications of this technology be sufficient to secure winder units 1 to a window element 20 with only one mount of the vacuum type.

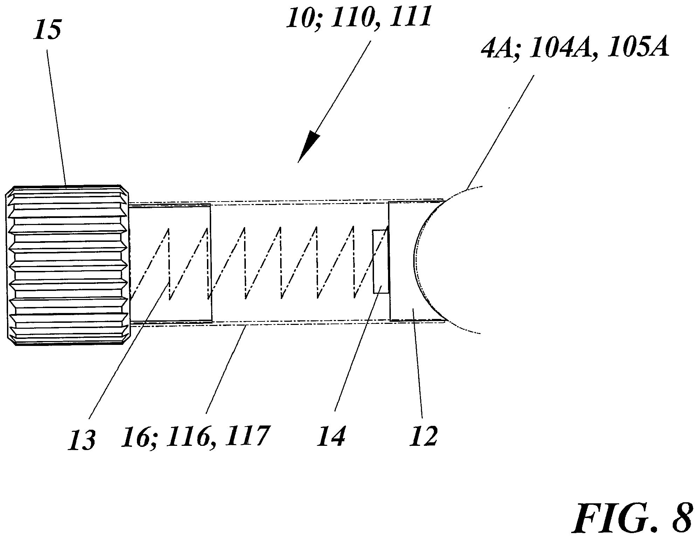

To secure that an appropriate wire tensioning control and a convenient winder unit 1 repositioning may be performed a brake mechanism 10 is integrated in the winder spool assembly 2. The integrated brake mechanism 10 is accommodated in a separate spool housing 8 associated with the winder unit body 6. The brake mechanism 10 continuously counteracts rotation of the winder spool 4 by yieldingly applying an adjustable force to a spool shaft 4A of the winder spool 4. Referring to Figs 3 and 8 the brake mechanism 10 basically comprises a brake force applicator 12 that is illustrated in the form of a contact shoe slidingly supported in a bore 16 of the winder spool housing 8. The brake force applicator 12 with one end thereof engages a spool shaft 4A. The second, opposite end of the brake force applicator 12 is in contact with a first end of a biasing member 13 forcing the brake force applicator 12 towards the spool shaft 4A to restrict rotation of the latter.

In the configuration that is shown in Fig. 8 and that is applicable to all winder unit embodiments discussed herein, the biasing member 13 is a coil type spring that with said first end cooperates with a guide formation 14 at said opposite end of the brake force applicator 12 and with a second end is received by a brake force adjuster 15 for adjusting a force applied to the brake force applicator 12 by the biasing member 13. To this end the brake force adjuster 15 has an external thread that engages a complementary internal thread of the bore 16 in the winder spool housing 8. The guide formation 14 may be the illustrated extension or may in an alternative embodiment be a recess receiving the first end of the biasing member 13.

It will now be appreciated that the force applied by the biasing member 13 to the spool shaft 4A will be increased by screwing in the brake force adjuster 15 further into the bore 16 and will be decreased by screwing out the brake force adjuster from the bore. It should likewise be clear that the brake force applicator 12 resistance to winder spool 4 rotation will be adjusted accordingly. With the presently proposed brake mechanism 10 that continuously and with an adjustable force counteracts rotation of the winder spool, rotation of said spool will be allowed at all times and in both winding and unwinding directions. The adjustable force yieldingly resisting spool rotation in both directions will effectively assist in avoiding cutting wire break in situations where cutting forces change dramatically. This adjustable force will also in all situations enable elimination of the risk of uncontrolled unwinding of cutting wire.

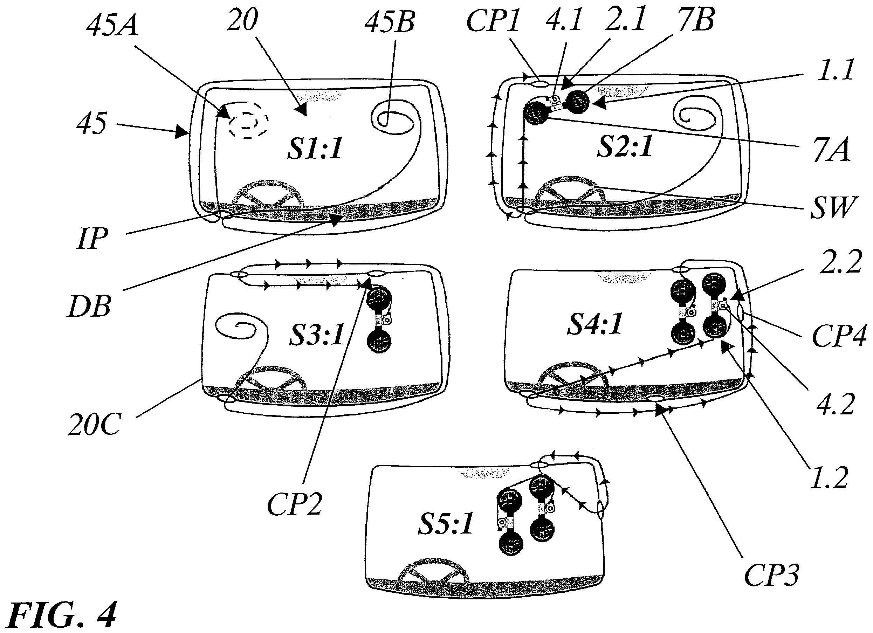

In a further aspect the technology relates to an improved method of removing a vehicle window element 20 by cutting through adhesive bonding an edge area 20C of the window element to a vehicle 40 (Fig. 1). The basic method using the present technology is described in detail and with reference to a practical example thereof that is very schematically illustrated in Fig. 4 and that is performed by means of winder units 1.1, 1.2 of the described first embodiment. The cutting is performed by means of a cutting wire 45 that is prepared in a length calculated for the specific window element 20 that is to be removed. The window element has first and second sides that are not specifically denoted in the accompanying drawing figures but that may also be referred to as outer and inner sides.

In step S1:1 first and second ends 45A, 45B of cutting wire 45 are inserted from a first, normally outer side to a second, normally inner side of the window element 20. The wire ends 45A, 45B are preferably inserted through the adhesive of the window element 20 using a specific, well known and thus not illustrated wire insertion tool. The wire ends are inserted at an insertion point IP in one of the lower corner areas of the window element 20. In the illustrated situation this corner is at the driver's side of a left-hand drive vehicle, as seen from inside the vehicle. For practical reasons the cutting wire 45 is pulled in approximately to the vehicle B-pillar (not shown) and then its ends are preferably straightened out or cut off, if bent. The bulk of the cutting wire 45 is applied to form a wire loop on said first, outer side of the window element 20. The wire loop is applied completely along the full edge 20C of the window element 20 between the vehicle window element 20 and a frame or bodywork of the vehicle 40. The remainder of the cutting wire length is pulled into the driver/passenger compartment of the vehicle 40.

In step S2:1 a first single-spool winder unit 1.1 is here mounted in the area of an upper corner of said second, inner side of the window element 20, just above the steering wheel SW and with the spool 4.1 facing the adhesive bead at the window element edge 20C. A shorter first end 45A of the cutting wire 45 is attached and secured to the spool 4.1 of the winder spool assembly 2.1 of the winder unit 1.1, such that a rigid connection is achieved there between. The first end of the cutting wire 45 is then pulled with the winder spool assembly 2.1 by slightly rotating said winder spool 4.1 .This first tensioning is performed such that the wire 45 is tensioned just enough so that it does at first not actually start cutting through the adhesive. As always, an interior protection is provided between glass and dashboard and all interior details are protected during the complete cutting out process.

The actual cutting operation is then started at the insertion point IP in the area of said lower corner of the second, inner side the window element 20, by further rotating the winder spool 4.1 of the first winder unit 1.1 to tension the wire more and then cut through the adhesive around the window element 40. When the adhesive bead has been cut for about an initial 10-20 centimeters, it should be checked that no wire parts cross-over at this stage. Should such a cross-over be present the loose longer wire end 45B should be gripped and moved around the cutting end 45A such that the cross-over is removed. Cutting is then continued in this manner in step S2:1 so that the cutting end 45A of the wire 45 proceeds up along the A-pillar (likewise not shown). Cutting is performed more slowly and with greater care around the corners of the window element 20 to protect interior details of the vehicle 40. Cutting then proceeds to a first cutting point position CP1 straight above the first winder unit 1.1 spool 4.1.

In step S3:1, after the initial cutting with the first cutting wire end 45A tensioned by the first winder unit 1.1 spool 4.1, the winder unit 1.1 is moved to an area at the opposite upper corner of the window element 20. This is done by loosening the winder unit mounts 7A, 7B and pulling and re-positioning the winder unit 1.1 so that it may be secured in a new position. In the new position the winder unit 1.1 is placed approximately parallel with another vehicle A-pillar and high up towards, but slightly spaced from the associated upper corner, with the spool 4.1 still facing the adhesive bead. Should the friction or cutting wire resistance increase too much this will be compensated for by loosening the above described brake force adjuster 15 to reduce the biasing force applied to the brake force applicator 12 by the biasing member 13. Cutting is continued along a vehicle upper part with the same wire end 45A, towards said opposite, upper corner. Cutting is then paused at a second cutting point position CP2, straight opposite the first single-spool winder unit 1.1 in its new position, before being continued towards the next corner where cutting will again be performed slowly and with care.

Proceeding to step S4:1, a second single-spool winder unit 1.2 is now mounted in the area of said opposite upper corner of the second, inner side of the window element 20. The second winder unit 1.2 is mounted so that it will be extended substantially parallel to the first winder unit 1.1 and with the spool 4.2 of its spool assembly 2.2 facing the adhesive bead at the window element edge 20C. The other end 45B of the cutting wire 45 is secured to the winder spool 4.2 and this end 45B of the cutting wire 45 is tensioned carefully. The cutting process is then continued along the lower window element edge, above the dashboard DB that is again protected by an appropriate interior protection. Towards the center of the lower edge of the window element 20 or slightly past said center, at a schematically indicated third cutting point position CP3, there may be encountered an extra amount of adhesive from a start-stop position of the adhesive application. In said area it may be advantageous to allow the cutting wire 45A to be pulled out from the first winder unit 1.1 winder spool 4.1 during this stage of the cutting process. This may facilitate cutting and prevent wire breakage in such situations with excess adhesive build-up, and is achieved with the present technology by further screwing the brake force adjuster in or out to increase/decrease the biasing force applied to the brake force applicator 12 by the biasing member 13. The use of a technique involving alternating clockwise and anticlockwise operation of the spools 4.1, 4.2 of the separate winder units 1.1, 1.1, as allowed with the presently proposed technology, represents a very efficient way of proceeding through a larger accumulation of adhesive.

When the cutting process is again back to normal the cutting out is continued up to a fourth cutting point CP4 at the edge of the window element opposite the second single-spool winder unit 1.2 spool 4.2. In step S5:1 the final phase of the cutting out continues up to the upper final corner area and past the latter until the window element 20 dismounting is finalized by cutting through the adhesive bead up to the second cutting point position CP2 with the second end 45B of the cutting wire 45 meeting the first end 45A of the cutting wire. This final cutting phase may, depending upon the actual situation, be performed by either winder unit 1.1, 1.2 or alternatingly with both of said single-spool winder units.

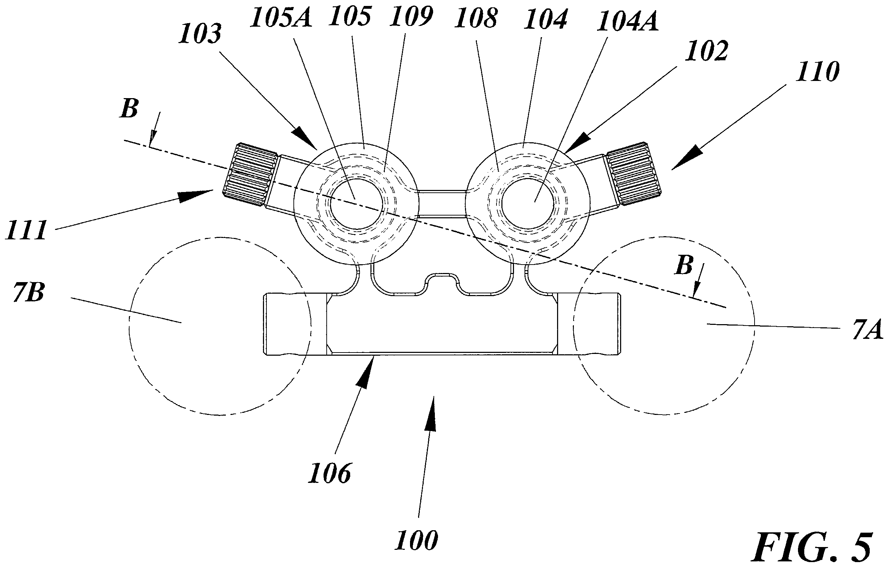

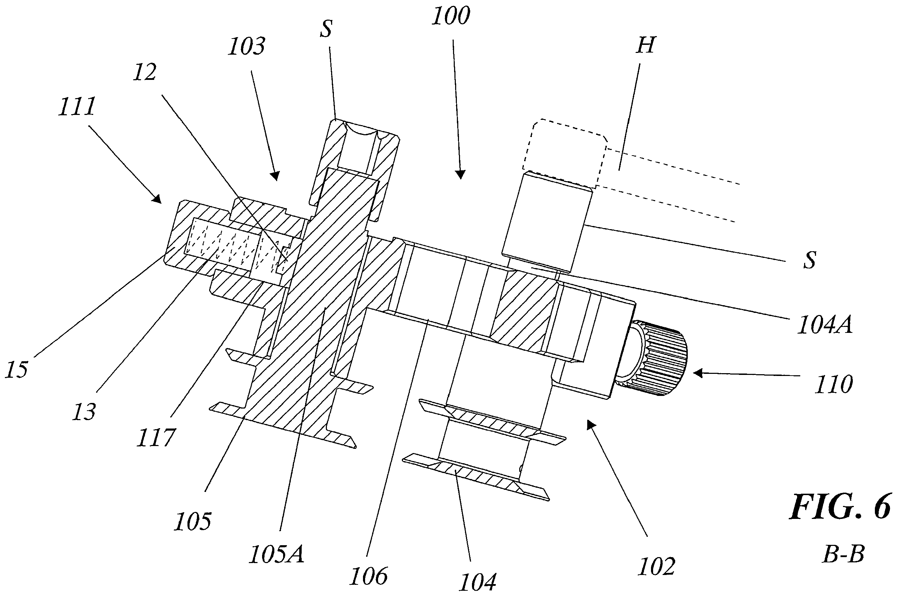

A second exemplifying embodiment of the present technology is shown in Figs. 5 and 6 and the technology is here embodied in a winder unit 100 that is likewise adapted for tensioning a cutting wire 45 when operated. As discussed above in connection with Fig 2 the cutting wire 45 is tensioned to cut through adhesive (not specifically shown) bonding a vehicle window element 20 to a vehicle 40. The unit 100 in this case has two winder spool assemblies 102, 103 with associated winder spools 104, 105 that are supported for rotation in respective winder spool housings 108, 109. The winder spool housings 108, 109 are integrated in a common winder unit body 106 and are likewise rotated to wind up wire thereon or to unwind wire therefrom. As indicated very schematically in Fig. 6 the respective winder spools 104, 105 may in the conventional manner preferably be rotated by means of e.g. a wrench-like handle H, such as a ratchet wrench or other similar means engaging a socket S provided at an upper end of winder spools 104, 105. For clarity it should be noted that in Fig. 5 the winder unit 100 is shown from below, that is from the side that during normal operation faces the window element 20.

This winder unit 100 also has two separate mounts 7A, 7B secured thereto for temporarily fixing the winder unit 100 on a surface of the window element 20. The mounts 7A, 7B are not shown in detail but are again preferably of the above described, commonly used suction cup type. Again, the wire 45 may preferably be guided in a guide groove extending around the outer periphery of the mounts 7A, 7B. It may be sufficient to secure also this embodiment of the winder unit 100 to a window element 20 with only one vacuum type mount.

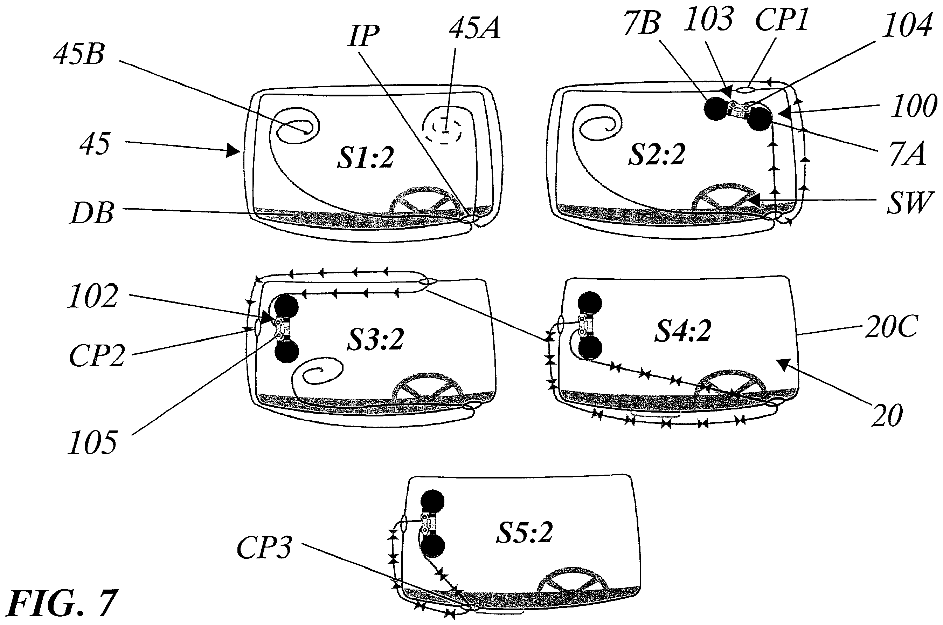

In this second embodiment a brake mechanism 110, 111 of the same general configuration as that described for the first embodiment and as illustrated in Fig. 8, is integrated in each winder spool assembly 102, 103. As was mentioned above, the integrated brake mechanisms 110, 111 are each accommodated in a separate spool housing 108, 109 associated with the winder unit body 106 and each brake mechanism 110, 111 continuously counteracts rotation of a respective winder spool 104, 105 by yieldingly applying the adjustable force to a spool shaft 104A, 105A of the associated winder spool 104, 105. Referring to Figs. 5, 6 and indirectly to Fig. 8, each one of the brake mechanisms 110, 111 is at least essentially identical to the other and basically comprises a brake force applicator 12 in the form of the contact shoe slidingly supported in a bore 116, 117, only one 117 shown in Fig. 7, of the associated winder spool housing 108, 109. As before, each brake force applicator 12 with one end thereof engages a respective spool shaft 104A, 105A. The second, opposite end of the brake force applicator 12 is in contact with a first end of a biasing member 13 forcing the brake force applicator 12 towards the associated spool shaft 104A, 105A to restrict rotation of the latter.

In this second embodiment of the winder unit 100 shown in Figs. 5 and 6 the coil type spring biasing members 13 with their first end cooperate with a guide formation 14 at the opposite end of the respective brake force applicator 12 and with a second end are received by a corresponding brake force adjuster 15 for adjusting the force applied to the brake force applicator 12 by the biasing member 13. Each brake force adjuster 15 has the mentioned external thread that engages a complementary internal thread of the associated bore 116, 117 in the winder spool housings 108, 109. The guide formations 14 may again be the illustrated extension or alternatively a recess.

In this embodiment the force applied by the biasing members 13 to the respective spool shaft 104A, 104B will as before be increased by screwing in the brake force adjuster 15 further into the bore 116, 117 and will be decreased by screwing out the brake force adjuster from the bore. The resistance of the brake force applicators 12 to the rotation of each winder spool 104, 105 will be adjusted accordingly so that the brake mechanisms 110, 111 continuously and with an adjustable force counteract rotation of the respective winder spool. Rotation of both spools 104, 105 will be allowed at all times and in both winding and unwinding directions. Like in the first embodiment the adjustable force yieldingly resisting spool rotation in both directions will effectively assist in avoiding cutting wire break in situations where cutting forces change dramatically and will also in all situations enable elimination of the risk of uncontrolled unwinding of cutting wire.

A further, alternative method of removing a fixed window element 20 by cutting through adhesive bonding a window element to a vehicle 40 (Fig. 1) is now described with reference to a practical example thereof that is very schematically illustrated in Fig. 7. This alternative method is based on the use of the just described second embodiment of the winder unit 100 and involves, with minor adjustments related to the configuration of the combined double-spool winder unit 100, the same general method steps as those described for the operation of the first embodiment. The cutting is again performed by means of a cutting wire 45 that has been prepared as described above for the first embodiment. Again the sides of the window element may also be referred to as a first outer and a second inner side.

In step S1:2 first and second ends 45A, 45B of cutting wire 45 are inserted from the first outer side to the second inner side of the window element 20 and are inserted through the adhesive in the described conventional manner. The wire ends are again inserted at an insertion point IP in a lower corner area of the window element 20. In the situation illustrated in Fig. 7 this corner is again at the driver's side of a left-hand drive vehicle, but in this case as seen from outside the vehicle. For practical reasons the cutting wire 45 is pulled in approximately to the vehicle B-pillar (not shown) and prepared as described above. The bulk of the cutting wire 45 is again applied to form a wire loop on the outside and completely along the full edge 20C of the window element 20 between the latter and the vehicle 40. The remainder of the cutting wire length is pulled into the driver/passenger compartment of the vehicle 40.

Here, a double-spool winder unit 100 is likewise mounted in the area of an upper corner of said second, inner side of the window element 20, just above the steering wheel SW and with the two spools 104, 105 facing the adhesive bead at the window element edge 20C. The shorter first end 45A of the cutting wire 45 is attached and secured to a first one 104 (the one shown to the right in step S2:2 of Fig. 7) of the spools 104, 105 of the two separate winder spool assemblies 102, 103 of the double-spool winder unit 100, such that a rigid connection is achieved there between. The first end of the cutting wire 45 is then pulled with the first winder spool assembly 102 by slightly rotating said first winder spool 104. This first tensioning is performed such that the wire 45 is tensioned just enough so that it does at first not actually start cutting through the adhesive. As described above all interior details are protected during the complete cutting out process.

The actual cutting operation is then started at the insertion point IP in the area of said lower corner of the second, inner side the window element 20, by further rotating the first winder spool 104 to tension the wire more and then cut through the adhesive around the window element 40. When the adhesive bead has been cut for about an initial 10-20 centimeters, it should be checked that no wire parts cross-over at this stage. Should such a cross-over be present the loose longer wire end 45B should be gripped and moved around the cutting end 45A to remove the cross-over. Cutting is continued in this manner in step S2:2 so that the cutting end 45A of the wire 45 proceeds up along the A-pillar (likewise not shown). Cutting is performed more slowly and with greater care around the corners of the window element 20 to protect interior details of the vehicle 40. Cutting then proceeds to a first cutting point position CP1 straight above the first winder unit 100 spool 104.

In step S3:2, after the initial cutting with the first cutting wire end 45A tensioned by the first winder spool 104, the winder unit 100 is moved to the area of the opposite upper corner of the window element 20. This is done by loosening the winder unit mounts 7A, 7B and pulling and re-positioning the winder unit 100 so that it may be secured in a new position. In the new position the winder unit 100 is placed approximately parallel with another vehicle A-pillar and high up towards the associated upper corner, with the spools 104, 105 still facing the adhesive bead. Should the friction or cutting wire resistance increase too much this will be compensated for by loosening the above described brake force adjuster 15 to reduce the biasing force applied to the brake force applicator 12 by the biasing member 13. Cutting is then continued along a vehicle upper part with the same wire end 45A and all the way to the corner where the cutting is again performed more slowly and with greater care. Cutting is then paused at a new, second cutting point position CP2 straight opposite the same first winder spool 104 of the winder unit 100 in its new position.

Proceeding to step S4:2, the other end 45B of the cutting wire 45 is then secured to a second or free one 105 of the winder spools 104, 105. The second end 45B of the cutting wire 45 is tensioned carefully and the cutting process is then continued along the lower edge of the window element, above the dashboard DB that is again protected by positioning the appropriate interior protection. Towards the center of the lower edge of the window element 20 or slightly past said center, at a third cutting point position CP3, there may be encountered an extra amount of adhesive from a start-stop position of the adhesive application. In said area it may be advantageous to allow the cutting wire 45A to be pulled out from the first winder spool 104 during this stage of the cutting process. This may facilitate cutting and prevent wire breakage in such situations with excess adhesive build-up, and is again achieved by increasing/decreasing the biasing force applied to the brake force applicator 12 by the biasing member 13. The use of a technique involving alternating clockwise and anti-clockwise operation of the winder unit spools 104, 105, as allowed with the presently proposed technology, represents a very efficient way of proceeding through a larger accumulation of adhesive. When the cutting process is again back to normal cutting out continues in step S5:2. The final phase of the cutting out continues up to the lower, final corner area and past the latter until the window element 20 dismounting is finalized by cutting through the adhesive bead up to the second cutting point position CP2 with the second end 45B of the cutting wire 45, meeting the first end 45A of the cutting wire.

Basically, the methods for using winder units of both of the described types, having single or double winder spool assemblies, involves the primary measure of determining a maximum as well as a minimum cutting force required to cut through adhesive bonding a particular window element to be cut out and removed from a vehicle, The determining of the required force may be performed by calculation, based on the type of vehicle or window element configuration in question, the type of adhesive used or the thickness of the adhesive bead or based on practical testing/experience. A force counteracting rotation of the respective winder spools is then adjusted based on the determined maximum and minimum cutting forces of a specific application. This force counteracting spool rotation is continuously yieldingly applied to the spool shaft of each of said winder spools by the above described, associated winder spool brake mechanism that is integrated in each winder spool assembly. In practical use of the method each brake force adjuster is adjusted by being screwed into the associated spool housing bore to increase the biasing force applied to the brake force applicator by the biasing member or by being screwed out therefrom to decrease the applied force.

This adjustment is performed such that the cutting wire 45 does not back off when rotation of the respective spool is stopped by releasing the handle H. This will also allow for an easy repositioning of the winder unit since it may be simply pulled and slid to the new position. The wire 45 should be maintained under tension during the full dismounting procedure. The unit having winder spools that may be rotated in both directions secures that there is always a possibility during dismounting a window element 20 to reverse the tensioning and thereby the cutting direction in case difficulties are encountered in a first cutting direction. The only result is that the dismounting may be completed in a different manner than planned from the beginning. In summary, a proper pre-adjustment of said force counteracting spool rotation will provide optimum cutting wire tensioning for effective cutting through the adhesive, for easy repositioning of the winder unit, when required, as well for avoiding wire break.

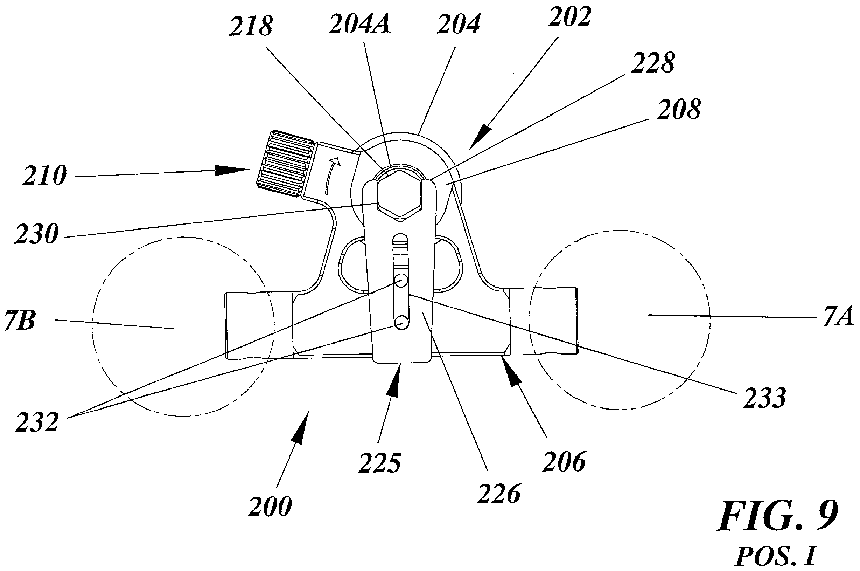

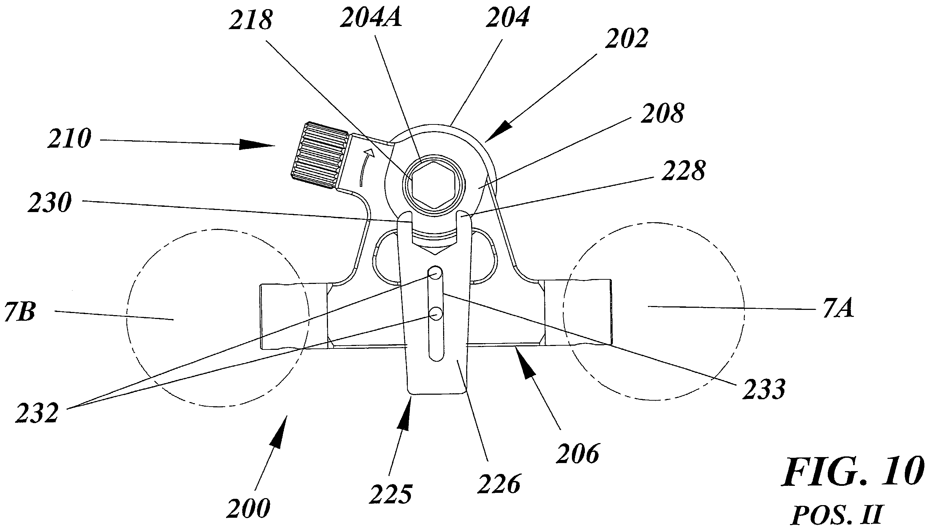

In Figs. 9 and 10 is shown a third modified embodiment of the winder unit 200 having a single winder spool assembly 202. This alternative embodiment is especially intended for use in removing window elements that present specific circumstances as far as cutting resistance is concerned. The alternative winder unit 200 is based on the winder unit of the first embodiment but is supplemented with a releasable stop 225 that is provided for selectively blocking or allowing rotation of the winder spool 204. The releasable stop 225 includes a locking anchor 226 that is adjustable between blocking mode positions II (unlocking position II of Fig. 10) and I (locking position I of Fig. 9) allowing rotation of the winder spool or alternatively blocking rotation of the winder spool 204.

The common locking anchor 226 is moveable between said blocking mode positions I, II that include an outer free position II allowing rotation of the winder spool 204 and an inner engaged position I, blocking rotation of the winder spool 204. The locking anchor 226 is a plate being displaceably supported on the winder unit body 206. The locking anchor 225 has an end portion 228 formed with a recess 230 that has a part-polygonal shape and is selectively interlockingly engageable with a formation 218 provided on the winder spool 204 and having an at least partially complimentary shape. The winder unit 200 body 206 has at least two positioning stop element 232 cooperating with an aperture 233 formed in the locking anchor 226 plate to define the blocking mode positions II, I at the respective ends thereof and to appropriately guide the locking anchor 226 in its movement between the end positions.

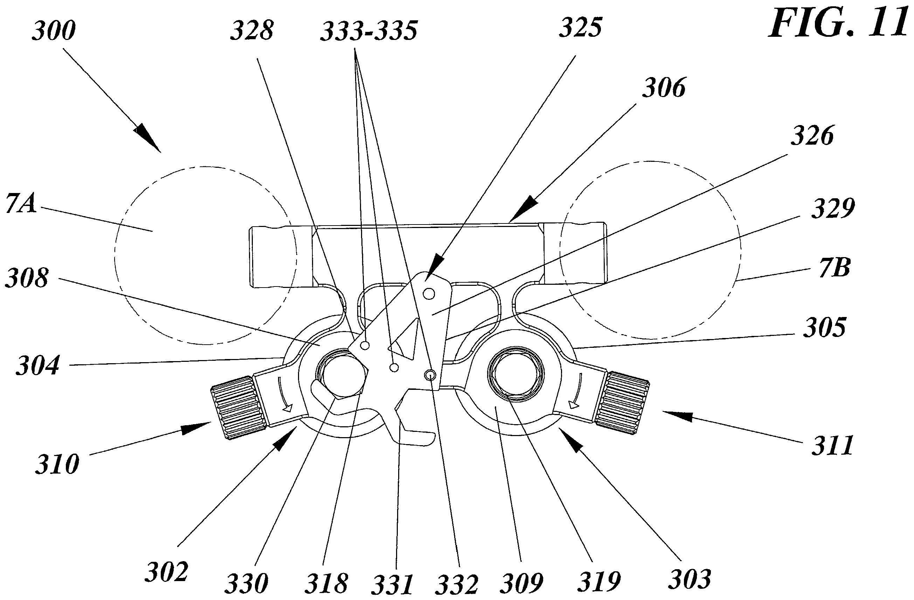

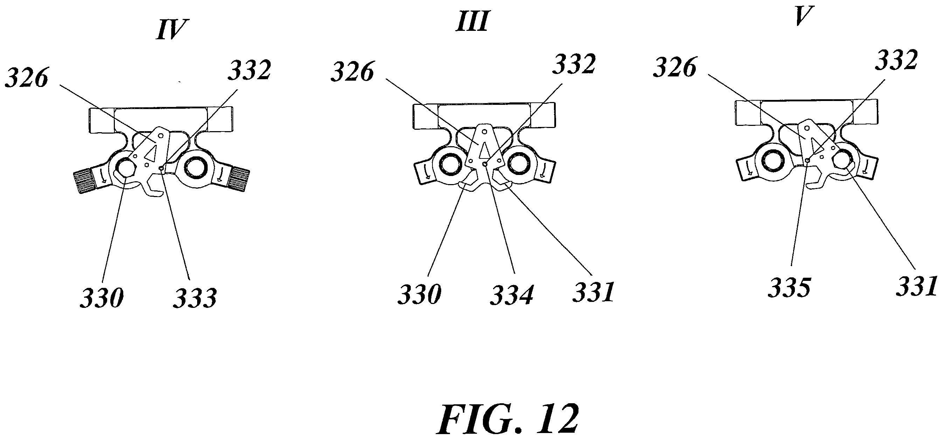

A fourth modified alternative embodiment of the double winder spool winder unit 300 is shown in Figs. 11 and 12. This alternative embodiment is again intended for use in removing window elements that present specific cutting resistance circumstances. The alternative winder unit 300 is based on the winder unit of the second embodiment but is supplemented with a releasable stop 325 that is provided for selectively blocking or allowing rotation of each winder spool 304, 305. The releasable stop 325 includes a common locking anchor 326 that is adjustable between blocking mode positions III, IV, V (see especially Fig. 12) allowing rotation of both winder spools 304, 305 or alternatively blocking rotation of either one of the winder spools 304, 305.

The common locking anchor 326 is pivotal between said blocking mode positions III, IV, V that include a central position III allowing rotation of both winder spools 304, 305 and two end positions IV and V respectively blocking rotation of a respective winder spool 304, 305. The locking anchor 326 is here a plate being pivotally mounted on the winder unit body 306, centrally between the two winder spools 304, 305, and has opposite side edges 328, 329. The side edges 328, 329 form recesses 330, 331 that each have a part-polygonal shape and each are selectively interlockingly engageable with a formation 318, 319 provided on the respective winder spool 304, 305 and having an at least partially complimentary shape. The winder unit 300 body 306 has at least one positioning stop element 132 cooperating with respective apertures 333, 334, 335 formed in the common locking anchor 326 plate so as to define the blocking mode positions III, IV, V.

In further developments of the above described basic methods for removing window elements by means of the winder units of the third and fourth embodiments, the rotation of the winder spool 204 or either of the winder spools 304, 305 may, where required, be selectively positively blocked by applying thereto the locking anchor 226 or the common locking anchor 326 of the releasable stop 225 or 325. The different blocking modes are activated by adjusting the locking anchor 226 or the common locking anchor 326 between the described blocking mode positions I and II or III, IV, V that allow rotation of the or each winder spool 204; 304, 305 or alternatingly block rotation of the winder spool 204 or either one of the winder spools 304, 305. If necessary the locking anchor 226 or common locking anchor 326 of the releasable stop 225 or 325 may specifically be applied to the winding spool 204 or any one of the winder spools 304, 305 if the situation arises that the adjustable force continuously counteracting rotation of a respective winder spool 204; 304, 305 is smaller than the cutting force.

In alternative, but not specifically illustrated embodiments of the invention variations of the different illustrated parts of the winder units may be employed without departing from the scope of the invention. It shall also be emphasized that although the technology has been described and illustrated with specific reference to an application for removing a windscreen from an automobile, the invention is in no way restricted to such a specific application. The basic principles of the invention may be applied to other window elements as well as to various types of vehicles.

The technology has been described in connection with what is presently considered the most practical and preferred embodiments, but it is to be understood that it is not limited to the disclosed embodiments. The technology is therefore intended to cover various modifications and arrangements included within the and scope of the appended claims.

## Claims

1. A winder unit (1; 100; 200; 300) for tensioning a cutting wire (45) when operated, said cutting wire being tensioned to cut through adhesive bonding a vehicle window element (20) to a vehicle (40), said winder unit having at least one winder spool assembly (2; 102, 103; 202; 302, 303) with a winder spool (4; 104, 105; 204; 304, 305) supported for rotation on a winder unit body (6; 106; 206; 306) for winding up wire thereon or unwinding wire therefrom when rotated and with an associated brake mechanism (10; 110, 111; 210; 310, 311) continuously counteracting rotation of the winder spool by yieldingly applying an adjustable force to a spool shaft (4A; 104A, 105A; 204A; 304A, 305A) of said winder spool and with at least one mount (7A, 7B) for temporary fixing of the winder unit on a window element (20), **characterized in that** two winder spool assemblies (102, 103; 302, 303) having one winder spool (104, 105; 304, 305) each are supported for rotation on the winder unit body (106; 306) and by a brake mechanism (10; 110, 111; 210; 310, 311) integrated in each of said two winder spool assemblies accommodated in a separate spool housing (8; 108, 109; 208; 308, 309) associated with the winder unit body (6; 106; 206; 306).

2. A winder unit (1; 100; 200,300) according to claim 1, **characterized in that** each integrated brake mechanism (10; 110; 111; 210; 310, 311) includes a brake force applicator (12) engaging the respective spool shaft (4A; 104A; 105A; 204A; 304A, 305A), a biasing member (13) forcing the associated brake force applicator towards the associated spool shaft and a force adjuster (15) for adjusting a force applied to the brake force applicator by the biasing member.

3. A winder unit (200; 300) according to claims 1 or 2, **characterized by** a releasable stop (225; 325) for selectively blocking or allowing rotation of each winder spool (204, 304, 305), said releasable stop including a locking anchor (226; 326) adjustable between blocking mode positions (I, II; III, IV, V) allowing rotation of each winder spool or blocking rotation of one of the winder spools.

4. A winder unit (200) according to claim 3, **characterized in that** the locking anchor (226) is displaceable between said blocking mode positions (I, II) and is a plate mounted on the winder unit body (206) and having an end portion (228) formed with a recess (230) that has a part-polygonal shape and is selectively interlockingly engageable with a formation (218) on the winder spool (204) having an at least partially complimentary shape.

5. A winder unit (300) according to claim 3, **characterized in that** a common locking anchor (326) is pivotal between said blocking mode positions (III, IV; V) that include a central position (III) allowing rotation of both winder spools (304, 305) and two end positions (IV and V, respectively) blocking rotation of a respective winder spool (304, 305).

6. A winder unit (300) according to claim 5, **characterized in that** the common locking anchor (326) is a plate being mounted on the winder unit body (306), centrally between the two winder spools (304, 305), and having opposite side edges (328, 329) forming recesses (330, 331) that each have a part-polygonal shape and each are selectively interlockingly engageable with a formation (318, 319) on the respective winder spool having an at least partially complimentary shape.

7. A winder unit (100; 300) according to any of claims 3-6, **characterized in that** the winder unit body (206; 306) has at least one positioning stop element (232; 332) cooperating with an aperture (233; 333-335) formed in the locking anchor (226; 326) to define the blocking mode positions (I, II; III, IV, V).

## Patentansprüche

1. Wicklereinheit (1; 100; 200; 300) zum Spannen eines Schneiddrahts (45) im Betrieb, wobei der Schneiddraht gespannt wird, um durch einen Klebstoff zu schneiden, der ein Fahrzeugfensterelement (20) mit einem Fahrzeug (40) verbindet, wobei die Wicklereinheit zumindest eine Wicklerspulenbaugruppe (2; 102, 103; 202; 302, 303) mit einer Wicklerspule (4; 104, 105; 204; 304, 305) umfasst, die zur Drehung auf einem Wicklereinheitkörper (6; 106; 206; 306) zum Aufwickeln von Draht darauf oder Abwickeln von Draht davon bei Drehung gelagert ist, und mit einem zugehörigen Bremsmechanismus (10; 110, 111; 210; 310, 311), der dauerhaft der Drehung der Wicklerspule durch nachgebendes Anwenden einer einstellbaren Kraft auf eine Spulenwelle (4A; 104A, 105A; 204A; 304A, 305A) der Wicklerspule entgegenwirkt, und mit zumindest einer Befestigung (7A, 7B) zum vorübergehenden Fixieren der Wicklereinheit an einem Fensterelement (20), **dadurch gekennzeichnet, dass** zwei Wicklerspulenbaugruppen (102, 103; 302, 303) mit einer Wicklerspule (104, 105; 304, 305) jeweils zur Drehung an dem Wicklereinheitkörper (106; 306) gelagert sind, und durch einen Bremsmechanismus (10; 110, 111; 210; 310, 311), der in jede der zwei Wicklerspulenbaugruppen integriert ist, die in einem separaten Spulengehäuse (8; 108, 109; 208; 308, 309), das zu dem Wicklereinheitkörper (6; 106; 206; 306) zugehörig ist, untergebracht sind.

2. Wicklereinheit (1; 100; 200,300) nach Anspruch 1, **dadurch gekennzeichnet, dass** jeder integrierte Bremsmechanismus (10; 110; 111; 210; 310, 311) einen Bremskraftapplikator (12), der in die entsprechende Spulenwelle (4A; 104A; 105A; 204A; 304A, 305A) eingreift, ein Vorspannelement (13), das den zugehörigen Bremskraftapplikator in Richtung der zugehörigen Spulenwelle drängt, und eine Krafteinstellvorrichtung (15) zum Einstellen einer Kraft, die durch das Vorspannelement auf den Bremskraftapplikator wirkt, beinhaltet.

3. Wicklereinheit (200; 300) nach Anspruch 1 oder 2, **gekennzeichnet durch** einen lösbaren Anschlag (225; 325) zum wahlweisen Blockieren oder Ermöglichen von Drehung von jeder Wicklerspule (204, 304, 305), wobei der lösbare Anschlag einen Arretierungsanker (226; 326) beinhaltet, der zwischen Blockierungsmoduspositionen (I, II; III, IV, V) einstellbar ist, die Drehung jeder Wicklerspule ermöglichen oder Drehung einer der Wicklerspulen blockieren.

4. Wicklereinheit (200) nach Anspruch 3, **dadurch gekennzeichnet, dass** der Arretierungsanker (226) zwischen den Blockierungsmoduspositionen (I, II) verschiebbar ist und eine Platte ist, die an dem Wicklereinheitkörper (206) befestigt ist, und einen Endabschnitt (228) aufweist, der mit einer Vertiefung (230) ausgebildet ist, die eine teilweise polygonale Form aufweist und wahlweise verriegelnd in eine Formation (218) an der Wicklerspule (204), die eine zumindest teilweise ergänzende Form aufweist, eingreifen kann.

5. Wicklereinheit (300) nach Anspruch 3, **dadurch gekennzeichnet, dass** ein gemeinsamer Verriegelungsanker (326) schwenkbar zwischen den Blockierungsmoduspositionen (III, IV; V), die eine mittige Position (III) beinhalten, die Drehung von beiden Wicklerspulen (304, 305) ermöglicht, und zwei Endpositionen (IV bzw. V), die Drehung einer entsprechenden Wicklerspule (304, 305) blockieren, bereitgestellt ist.

6. Wicklereinheit (300) nach Anspruch 5, **dadurch gekennzeichnet, dass** der gemeinsame Verriegelungsanker (326) eine Platte ist, die an dem Wicklereinheitkörper (306) mittig zwischen zwei Wicklerspulen (304, 305) befestigt ist und gegenüberliegende Seitenränder (328, 329) aufweist, die Vertiefungen (330, 331) bilden, die jeweils eine teilweise polygonale Form aufweisen und die jeweils wahlweise verriegelnd in eine Formation (318, 319) an der entsprechenden Wicklerspule, die eine zumindest teilweise ergänzende Form aufweist, eingreifen.

7. Wicklereinheit (100; 300) nach einem der Ansprüche 3-6, **dadurch gekennzeichnet, dass** der Wicklereinheitkörper (206; 306) zumindest ein Positionierungsanschlagelement (232; 332) aufweist, das mit einer Öffnung (233; 333-335) zusammenwirkt, die in dem Verriegelungsanker (226; 326) gebildet ist, um die Blockierungsmoduspositionen (I, II; III, IV, V) zu definieren.

## Revendications

1. Unité d'enrouleur (1 ; 100 ; 200 ; 300) pour tendre un fil de coupe (45) lors d'un fonctionnement, ledit fil de coupe étant tendu pour couper à travers le collage adhésif d'un élément de vitre de véhicule (20) sur un véhicule (40), ladite unité d'enrouleur ayant au moins un ensemble bobine d'enrouleur (2 ; 102, 103 ; 202 ; 302, 303) ayant une bobine d'enrouleur (4 ; 104, 105 ; 204 ; 304, 305) portée pour une rotation sur un corps d'unité d'enrouleur (6 ; 106 ; 206 ; 306) pour enrouler un fil sur celui-ci ou dérouler un fil à partir de celui-ci lorsqu'il est mis en rotation et ayant un mécanisme de frein associé (10 ; 110, 111 ; 210 ; 310, 311) contrecarrant en continu la rotation de la bobine d'enrouleur par l'application de manière élastique d'une force réglable sur un arbre de bobine (4A ; 104A, 105A ; 204A ; 304A, 305A) de ladite bobine d'enrouleur et ayant au moins un support (7A, 7B) pour la fixation temporaire de l'unité d'enrouleur sur un élément de vitre (20), **caractérisée en ce que** deux ensembles bobine d'enrouleur (102, 103 ; 302, 303) ayant une bobine d'enrouleur (104, 105 ; 304, 305) chacun sont portés pour une rotation sur le corps d'unité d'enrouleur (106 ; 306) et par un mécanisme de frein (10 ; 110, 111 ; 210 ; 310, 311) intégré dans chacun desdits deux ensembles bobine d'enrouleur logés dans un boîtier de bobine distinct (8 ; 108, 109 ; 208 ; 308, 309) associé au corps d'unité d'enrouleur (6 ; 106 ; 206 ; 306) .

2. Unité d'enrouleur (1 ; 100 ; 200, 300) selon la revendication 1, **caractérisée en ce que** chaque mécanisme de frein intégré (10 ; 110 ; 111 ; 210 ; 310, 311) inclut un applicateur de force de frein (12) venant en prise avec l'arbre de bobine respectif (4A ; 104A ; 105A ; 204A ; 304A, 305A), un élément de sollicitation (13) forçant l'applicateur de force de frein associé en direction de l'arbre de bobine associé et un dispositif de réglage de force (15) pour régler une force appliquée sur l'applicateur de force de frein par l'élément de sollicitation.

3. Unité d'enrouleur (200 ; 300) selon les revendications 1 ou 2, **caractérisée par** une butée libérable (225 ; 325) pour sélectivement bloquer ou permettre la rotation de chaque bobine d'enrouleur (204, 304, 305), ladite butée libérable incluant une ancre de verrouillage (226 ; 326) réglable entre des positions de mode de blocage (I, II ; III, IV, V) permettant la rotation de chaque bobine d'enrouleur ou bloquant la rotation de l'une des bobines d'enrouleur.

4. Unité d'enrouleur (200) selon la revendication 3, **caractérisée en ce que** l'ancre de verrouillage (226) est déplaçable entre lesdites positions de mode de blocage (I, II) et est une plaque montée sur le corps d'unité d'enrouleur (206) et ayant une partie d'extrémité (228) formée avec un évidement (230) qui possède une forme de partie de polygone et qui est sélectivement apte à être mise en prise de manière verrouillée avec une formation (218) sur la bobine d'enrouleur (204) ayant une forme au moins partiellement complémentaire.

5. Unité d'enrouleur (300) selon la revendication 3, **caractérisée en ce qu'**une ancre de verrouillage commune (326) est pivotante entre lesdites positions de mode de blocage (III, IV ; V) qui incluent une position centrale (III) permettant la rotation des deux bobines d'enrouleur (304, 305) et deux positions d'extrémité (IV et V, respectivement) bloquant la rotation d'une bobine d'enrouleur respective (304, 305).

6. Unité d'enrouleur (300) selon la revendication 5, **caractérisée en ce que** l'ancre de verrouillage commune (326) est une plaque montée sur le corps d'unité d'enrouleur (306), centralement entre les deux bobines d'enrouleur (304, 305) et ayant des bords latéraux (328, 329) formant des évidements (330, 331) qui possèdent chacun une forme de partie de polygone et qui sont chacun sélectivement apte à être mis en prise de manière verrouillée avec une formation (318, 319) sur la bobine d'enrouleur respective ayant une forme au moins partiellement complémentaire.

7. Unité d'enrouleur (100 ; 300) selon l'une quelconque des revendications 3 à 6, **caractérisée en ce que** le corps d'unité d'enrouleur (206 ; 306) possède au moins un élément de butée de positionnement (232 ; 332) coopérant avec une ouverture (233 ; 333-335) formée dans l'ancre de verrouillage (226 ; 326) pour définir les positions de mode de blocage (I, II ; III, IV, V).
